# EUROPÄISCHE PATENTSCHRIFT

(11) **EP 1 550 608 B1**
(45) Veröffentlichungstag und Bekanntmachung des Hinweises auf die Patenterteilung: **11.04.2007**
(21) Anmeldenummer: 04030214.3
(22) Anmeldetag: 21.12.2004
(51) Int. Cl.: B64D 11/00, B60R 5/00, B61D 37/00

(54) **Gepäckkasten mit Hubvorrichtung in einem Flugzeug**
Lowerable luggage compartments and their actuation system
Compartiments à bagages avec leur dispositif de levage

(30) Priorität: 30.12.2003 DE 10361830
(43) Veröffentlichungstag der Anmeldung: 06.07.2005
(73) Patentinhaber: Airbus Deutschland GmbH, 21129 Hamburg (DE)
(72) Erfinder: Wisch, Bodo, Dipl.-Ing., 28309 Bremen (DE); Rowold, Lars, Dipl.-Ing., 26215 Wiefelstede (DE)
(74) Vertreter: Klöpper, Ute

(56) Entgegenhaltungen:
- US-A- 2 999 683
- US-A- 5 441 218
- US-A1- 2001 011 692

## Beschreibung

Die Erfindung betrifft eine Gepäckkastenanordnung in einem Flugzeug mit mindestens einem Gepäckkasten, wobei der mindestens eine Gepäckkasten zwischen einer geöffneten und einer geschlossenen Position bewegbar ist und wobei die Hubvorrichtung ein Krafterzeugungselement umfaßt, das eine Hubkraft auf den mindestens einen Gepäckkasten ausübt. Die Erfindung betrifft weiterhin ein Flugzeug mit einer Gepäckkastenanordnung.

Insbesondere betrifft die Erfindung in Verkehrsflugzeugen oberhalb der Sitzreihen angeordnete bewegbare Gepäckkästen. Zum Versetzen eines Gepäckkastens von einer geöffneten Position in eine geschlossene Position kann zur Unterstützung des Bedieners ein den Gepäckkasten unterstützendes mechanisches Krafterzeugungselement, insbesondere eine Gasdruckfeder vorgesehen sein (DE 41 30 644 C2, US 5 567 028). Jedoch muß die erforderliche Restkraft manuell vom Bediener aufgewendet werden. Zudem sind solche Anordnungen aufgrund der begrenzten Lebensdauer von Gasdruckfedern wartungsintensiv. Je nach Gewicht der Zuladung kann eine Anpassung der Federkraft erforderlich sein, was gegebenenfalls einen Gewichtssensor für das Zuladungsgewicht erfordert.

Pneumatische Krafterzeugungselemente erfordern aufwendige Vorrichtungen für die Drucklufterzeugung im Flugzeug.

Elektrische Krafterzeugungselemente, insbesondere Elektromotoren, benötigen eine bestimmte Leistungsaufnahme für das Schließen der Gepäckkästen ohne Fremdkraft. Bei der in einem Flugzeug vorgesehenen Vielzahl von Gepäckkästen kann dies zeitweilig zu einer außerordentlichen Belastung des Bordnetzes führen. Die Versorgungsleitungen vom Bordnetzwerk zu den Elektromotoren müssen für hohe Stromstärken ausgelegt sein und weisen daher ein hohes Gewicht auf.

Solche elektrische Krafterzeugungselemente sind beispielsweise in der US2001/0011692 A1 dargestellt. Bei einer Gepäckablage mit einem absenkbaren Gepäckfach, ist das Grepäckfach über mindestens ein Führungssystem von einer oberen geschlossenen Position in eine untere offene Beladeposition absenkbar. Die Gepäckablage weist weiterhin eine Antriebseinrichtung auf und es ist eine Kupplungseinrichtung zum Abkoppeln der Antriebseinrichtung vom Führungssystem vorgesehen.

Um diese Nachteile zu verringern, ist es bekannt, einen Elektromotor mit einer geringeren Leistungsaufnahme zu verwenden und die Restkraft zum Schließen des Gepäckkastens mittels eines mechanisches Krafterzeugungselements, insbesondere einer Gasdruckfeder zu erzeugen. Solche Anordnungen sind jedoch aufgrund der begrenzten Lebensdauer von Gasdruckfedern wartungsintensiv.

Die Aufgabe der Erfindung besteht darin, eine Gepäckkastenanordnung in einem Flugzeug bereitzustellen, die wartungsarm ist und die Belastung des Bordnetzes verringert, sowie vorzugsweise ein verringertes Gewicht aufweist und bedienungsfreundlich ist.

Die Erfindung löst diese Aufgabe mit den Mitteln der unabhängigen Ansprüche, insbesondere dadurch, daß das Krafterzeugungselement ein elektrisches Krafterzeugungselement ist, und die Gepäckkastenanordnung einen wiederaufladbaren Energiespeicher zum Speichern von Energie für den Betrieb des elektrischen Krafterzeugungselements umfasst. Aufgrund der Verwendung eines elektrischen Krafterzeugungselements kann auf wartungsintensive mechanische Krafterzeugungsmittel, insbesondere eine Gasdruckfeder, verzichtet werden. Die zum Schließen eines Gepäckkastens über einen kurzen Zeitraum erforderliche hohe Leistung kann aus dem Energiespeicher entnommen werden, ohne daß hierdurch das Bordnetz belastet wird. Der Energiespeicher kann nach der Entnahme von elektrischer Leistung vorzugsweise über das Bordnetz wieder aufgeladen werden.

Der Energiespeicher wird vorzugsweise über einen relativ längeren Zeitraum mit einer verringerten Ladeleistung bzw. Stromstärke aus dem Bordnetz aufgeladen werden, wodurch die Belastung des Bordnetzes reduziert wird. Aufgrund der geringeren Ladestromstärke können die Verbindungsleitungen zwischen der Hubvorrichtung und dem Bordnetz einen geringen Querschnitt und daher ein geringes Gewicht aufweisen. Zum Laden des Energiespeichers mit Energie aus dem Bordnetz weist die Hubvorrichtung zweckmäßigerweise eine entsprechende Ladeeinrichtung auf. Die Ladeleistung der Ladeeinrichtung ist vorzugsweise wesentlich geringer als die Leistungsaufnahme der elektrischen Krafterzeugungsmittel. "Wesentlich geringer" bedeutet mindestens einen Faktor 2, vorzugsweise mindestens einen Faktor 5 geringer.

Vorzugsweise ist die Gewichtskraftunterstützung ausschließlich elektrisch. Die elektrischen Krafterzeugungsmittel erlauben es, den Gepäckkasten vorzugsweise vollständig ohne Fremdkraftunterstützung zu schließen, was die Bedienungsfreundlichkeit erhöht.

Vorzugsweise ist jedem Gepäckkasten eines Flugzeugs ein eigener Energiespeicher zugeordnet. Es handelt sich also um eine Mehrzahl dezentraler Energiespeicher. Dies erlaubt es, die für hohe Stromstärke ausgelegte Leitungslänge möglichst gering zu halten. Es kann auch zweckmäßig sein, für eine gewisse Zahl von Gepäckkästen jeweils einen gemeinsamen Energiespeicher vorzusehen, um die Zahl der Energiespeicher zu reduzieren.

Besonders einfach und daher bevorzugt sind elektrische Speichermittel für den Energiespeicher, insbesondere ein oder mehrere im wesentlichen wartungsfreie Kondensatoren. Eine Mehrzahl von Kondensatoren kann je nach gewünschter Ausgangsspannung in Reihe geschaltet sein. Jedoch sind auch wiederaufladbare Batterien als Energiespeicher grundsätzlich geeignet. Vorzugsweise ist der Energiespeicher ausreichend für mindestens einen, vorzugsweise mindestens zwei, weiter vorzugsweise mindestens vier Betätigungszyklen dimensioniert, damit im Falle wiederholter Betätigung des Gepäckkastens, d.h. wiederholten Öffnens und Schließens, nicht zunächst die Aufladung des Energiespeichers abgewartet werden muß.

Die Erfindung bezieht sich auf bewegbare Gepäckkästen und ist dadurch abgegrenzt von festen Gepäckkästen, die beispielsweise mittels einer Klappe geöffnet und verschlossen werden.

Weitere vorteilhafte Merkmale gehen aus der folgenden Erläuterung der Erfindung anhand bevorzugter Ausführungsformen unter Bezugnahme auf die beigefügten Figuren hervor. Dabei zeigen:
- Fig. 1:: eine perspektivische Schnittdarstellung eines Gepäckkastens im geöffneten Zustand;
- Fig. 2:: eine Querschnittsansicht eines Gepäckkastens im geöffneten Zustand;
- Fig. 3:: eine Querschnittsansicht eines Gepäckkastens im geschlossenen Zustand; und

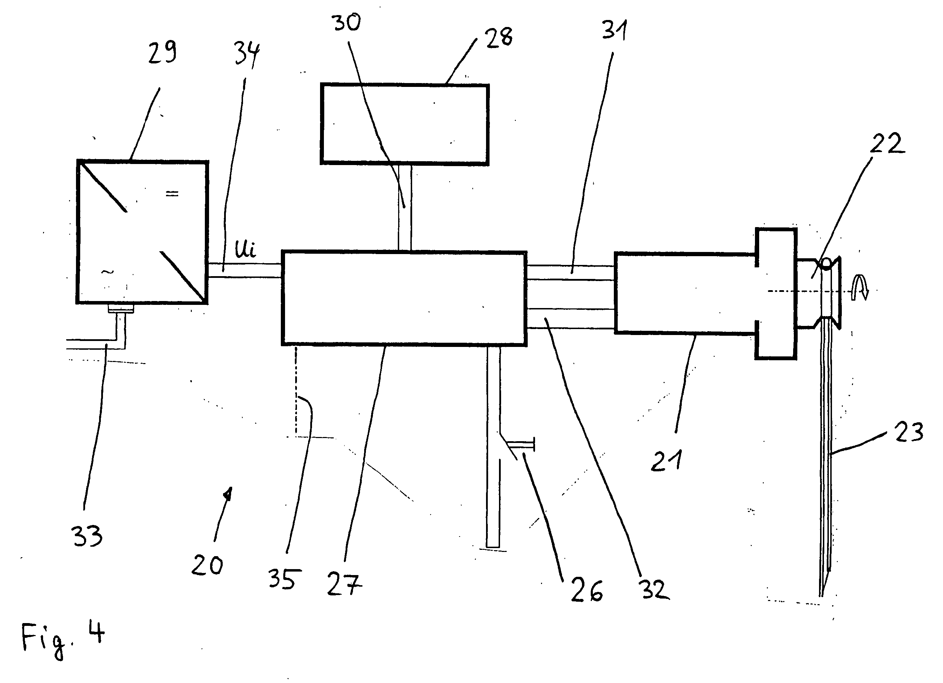

- Fig. 4:: eine schematische Darstellung einer Hubvorrichtung.

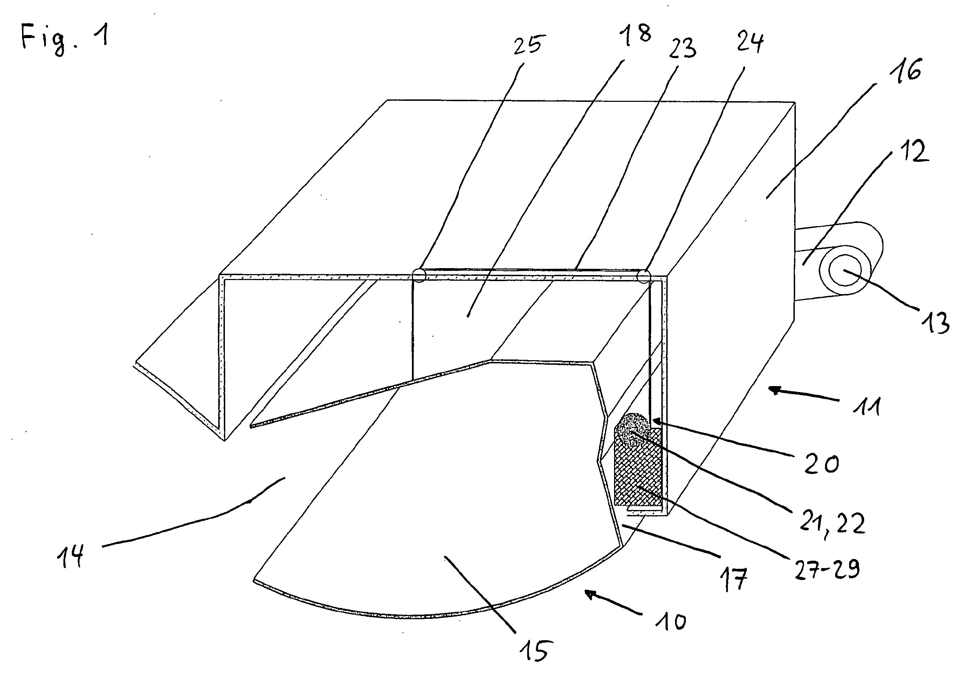

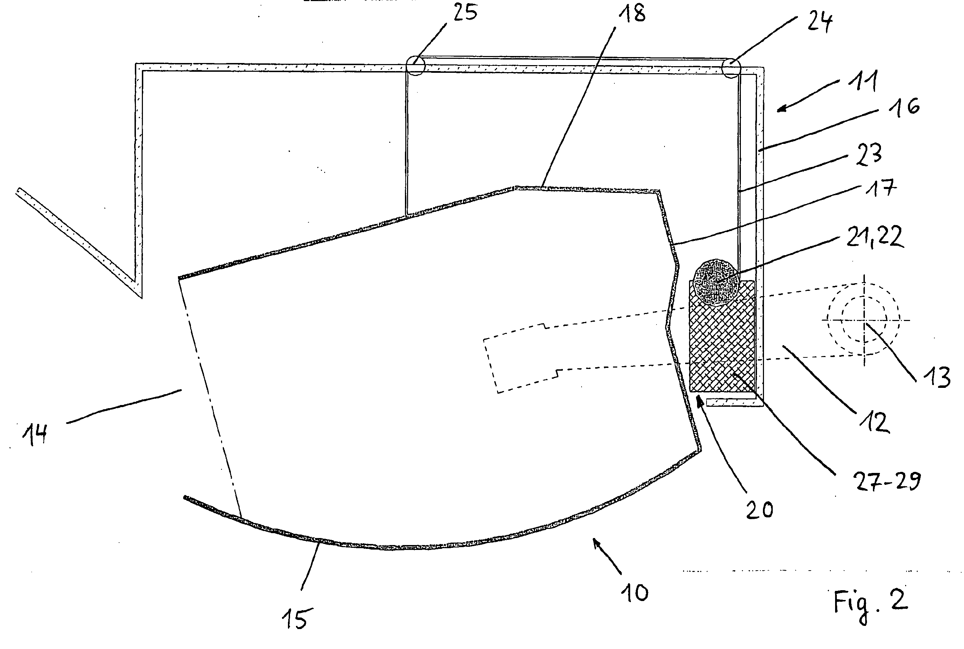

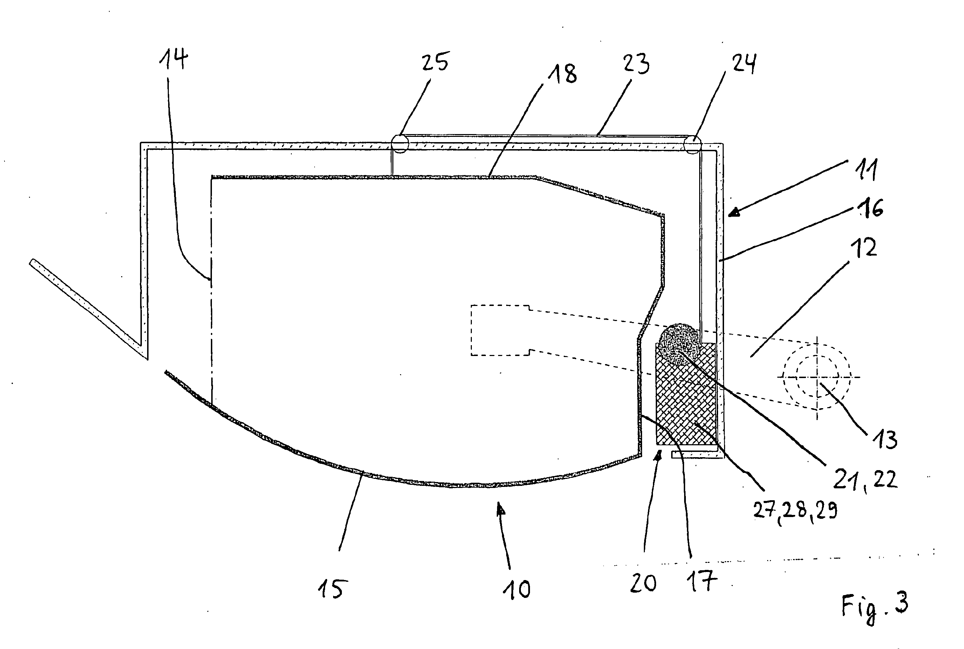

Über den Sitzreihen eines Flugzeugs sind Gepäckkästen in einem Längsgestell 11 angeordnet. Ein Gepäckkasten 10 ist mittels eines Tragarms 12 relativ zum Längsgestell 11 um das Drehgelenk 13 schwenkbar angeordnet. In der in den Fig. 1 und 2 gezeigten geöffneten Position kann der Gepäckkasten 10 durch eine Öffnung 14 be- und entladen werden. In der in Fig. 3 gezeigten geschlossenen Position schließt die Bodenwand 15 des Gepäckkastens 10 bündig mit dem Längsgestell 11 ab, um in dem Gepäckkasten 10 enthaltenes Gepäck sicher zu verstauen.

Um den Gepäckkasten 10 von der geöffneten in die geschlossene Position zu bewegen, ist eine Hubvorrichtung 20 vorgesehen. Die Hubvorrichtung 20 umfaßt einen Elektromotor 21 mit einem Getriebe zum Antrieb einer Seilrolle 22. Um die Seilrolle 22 läuft ein Antriebsseil 23 über Umlenkrollen 24, 25 und ist an seinem motorfernen Ende an der Deckenwand 18 des Gepäckkastens 10 befestigt. Der Elektromotor 21 wird mittels in einer elektrischen Speichereinheit 28 gespeicherter elektrischer Energie betrieben und mittels einer Steuereinrichtung 27 gesteuert. Die Steuereinrichtung 27 wird mit einer Versorgungsspannung Ui versorgt, die beispielsweise von einem Wandler 29 erzeugt wird. Der Wandler 29 ist über Leitungen 33 mit dein Bordnetz verbunden. Elektromotor 21, Steuereinrichtung 27, Speichereinheit 28 und Wandler 29 sind zweckmäßigerweise mit dem Längsgestell 11 verbunden, beispielsweise an einer Rückwand 16 des Längsgestells 11 hinter einer Rückwand 17 des Gepäckkastens 10 befestigt. Der Elektromotor 21 kann für gewisse Anwendungen Leitungen 32 für eine Temperaturüberwachung aufweisen.

Bei dem vorliegenden Ausführungsbeispiel weist der oder jeder Gepäckkasten 10 jeweils eine Speichereinheit 28 auf. Dies ist aber nicht zwingend der Fall; beispielsweise könnte eine Speichereinheit 28 auch zwei, oder mehr, benachbarten Gepäckkästen zugeordnet sein. In diesem Fall wäre die Dimensionierung der Speichereinheit 28 zweckmäßigerweise entsprechend größer im Verhältnis zu den im folgenden angegebenen Werten.

An dem Gepäckkasten 10, beispielsweise an der Bodenwand 15, oder an dem Längsgestell 11 ist ein Schalter 26 vorgesehen. Wird ausgehend von der in Fig. 2 gezeigten geöffneten Position der Schalter 26 von einer Bedienperson betätigt, so wird ein entsprechendes Signal an die Steuereinrichtung 27 gesendet. Die Steuereinrichtung 27 prüft gegebenenfalls den Ladezustand der elektrischen Speichereinheit 28. Es sei angenommen, daß der Ladezustand der Speichereinheit 28 ausreichend für einen Betätigungszyklus des Gepäckkastens 10 ist. Die Steuereinrichtung 27 verbindet dann den Elektromotor 21 mit der Speichereinheit 28, um den Elektromotor 21 und damit die Seilrolle 22 im Uhrzeigersinn zu drehen und den Gepäckkasten 10 mittels des Antriebsseils 23 nach oben bis in die in Fig. 3 gezeigte geschlossene Position zu ziehen. In der geschlossenen Position kann der Gepäckkasten 10 mittels eines nicht gezeigten Schlosses arretiert gehalten werden. Der Schalter 26 kann vorzugsweise als Tastschalter ausgeführt sein, der als einfacher, kleiner und daher unaufwendiger Membranschalter ausgeführt sein kann.

Sowohl der Elektromotor 21 als auch die Speichereinheit 28 sind ausreichend dimensioniert, um den Schließvorgang zuverlässig ohne Fremdkraftunterstützung bis zu einem maximalen Zuladungsgewicht für den Gepäckkasten 10 durchzuführen. Eine Unterstützung des Gepäckkastens 10 durch den Bediener ist nicht erforderlich. Für einige Anwendungen weist der Elektromotor 21 vorzugsweise eine Leistungsaufnahme von mehr als 50 W, beispielsweise etwa 80 W auf. Da die Drehgeschwindigkeit bzw. die Leistungsaufnahme des Elektromotors 21 näherungsweise konstant, d.h. unabhängig von dem Beladungszustand des Gepäckkastens 10 ist, ist ein Gewichtssensor für eine Leistungsanpassung des Elektromotors 21 entbehrlich.

Die Speichereinheit 28 ist ausreichend dimensioniert, um den Gepäckkasten mindestens fünfmal in Folge schließen zu können. Die elektrische Speichereinheit 28 umfaßt einen oder eine Mehrzahl in Reihe geschalteter Kondensatoren, die für die Entnahme ausreichend hoher Ströme eingerichtet sind. Es kann sich beispielsweise um sog. Ultra-Caps handeln. Für einige Anwendungen beträgt die Kapazität der Speichereinheit 28 insgesamt mindestens 50 F, beispielsweise im Bereich von 100 F. Die Leitungen 30, 31 zwischen der Speichereinheit 28 und dem Elektromotor 21 müssen eine ausreichende Stromleitfähigkeit, insbesondere einen ausreichenden Leitungsquerschnitt im Hinblick auf die maximal fließenden Ströme aufweisen.

Nach einer Entladung wird die elektrische Speichereinheit 28 von der Steuereinrichtung 27, die gleichzeitig als Ladeeinrichtung dient, wieder aufgeladen. Der Ladestrom wird über die Leitungen 33 dem Bordnetz entnommen. Die Steuereinrichtung 27 entnimmt dem Bordnetz einen Ladestrom, der wesentlich geringer ist als der Entnahmestrom aus der Speichereinheit 28 für den Betrieb des Elektromotors 21. Um die Belastung des Bordnetzes zu reduzieren, beträgt die Ladeleistung vorzugsweise höchstens 15 W, weiter vorzugsweise höchstens 10 W, weiter vorzugsweise höchstens 8 W. Aufgrund dieser relativ geringen Leistungen werden an die Dimensionierung der Leitungen 33, 34 zwischen dem Bordnetz und der Steuereinrichtung 27 keine besonderen Anforderungen gestellt, so daß diese insbesondere einen relativ geringen Leitungsquerschnitt und daher ein relativ geringes Gewicht aufweisen können. Entsprechendes gilt für die Dimensionierung des Wandlers 29, der eine entsprechend geringe maximale Leistungsaufnahme aufweisen kann. Die Ladeleistung ist ausreichend, um eine Aufladung der Speichereinheit 28 innerhalb einer geringen Ladezeitspänne im Bereich von weniger als 600 s, vorzugsweise weniger als 300 s zu ermöglichen.

Wird in der in Fig. 3 gezeigten geschlossenen Position der Tastschalter 26 von einer Bedienperson betätigt, so wird ein entsprechendes Signal an die Steuereinrichtung 27 gesendet. Die Steuereinrichtung 27 entriegelt das Gepäckkastenschloß, wenn dieses vorzugsweise elektrisch ansteuerbar ist. Andernfalls kann anstelle, zusätzlich oder in Kombination mit der Betätigung des Tastschalters 26 eine Entriegelung des Gepäckkastenschlosses erforderlich sein. Die Steuereinrichtung 27 verbindet dann den Elektromotor 21 mit der Speichereinheit 28, um den Elektromotor 21 und damit die Seilrolle 22 im Gegenuhrzeigersinn zu drehen und den Gepäckkasten 10 mittels des Antriebsseils 23 nach unten bis in die in Fig. 3 gezeigte geöffnete Position abzulassen. Dabei wirkt der Elektromotor 21 zweckmäßigerweise als Motorbremse, um ein ruck- oder schlagartiges Ablassen des Gepäckkastens 10 zu verhindern.

Über die Signalleitung 35 und eine entsprechende Schnittstelle kann die Steuereinrichtung 27 optional mit einer zentralen Steuereinheit des Flugzeugs verbunden sein, beispielsweise über einen vorhandenen Datenbus. Dies erlaubt es, die Gepäckkästen zentral zu betätigen. Beispielsweise kann es in bestimmten Flugphasen sinnvoll sein, sämtliche Gepäckkästen eines Flugzeugs zentral zu schließen und verriegelt zu halten, so daß die Betätigung eines ggf. vorgesehenen individuellen Tastschalters 26 keinen Öffnungsvorgang des entsprechenden Gepäckkastens 10 auslöst. Weiterhin kann über die zentrale Steuereinheit eine vollautomatische Steuerung der Gepäckkästen 10 erfolgen, bei der ein Bediener keine Tätigkeit mehr an einem einzelnen Gepäckkasten zum Öffnen bzw. Schließen verrichten muß, d.h. ggf. auch die individuellen Tastschalter 26 nicht mehr betätigen muß. Zweckmäßigerweise sind daher zum vollautomatischen Öffnen der Gepäckkästen die Gepäckkastenschlösser von der zentralen Steuereinheit des Flugzeugs aus ansteuerbar. Es handelt sich daher vorzugsweise um elektromechanische, beispielsweise elektromagnetische Gepäckkastenschlösser. Auch für einen Testbetrieb ist die Ansteuerung der Gepäckkästen über die zentralen Steuereinheit vorteilhaft.

## Patentansprüche

1. Gepäckkastenanordnung mit mindestens einem Gepäckkasten in einem Flugzeug,
wobei der mindestens eine Gepäckkasten (10) eine Hubvorrichtung aufweist;
wobei der mindestens eine Gepäckkasten (10) zwischen einer geöffneten und einer geschlossenen Position bewegbar ist; und
wobei die Hubvorrichtung ein Krafterzeugungselement (21) umfasst, das eine Hubkraft auf den mindestens einen Gepäckkasten (10) ausübt; und wobei
das Krafterzeugungselement (21) ein elektrisches Krafterzeugungselement ist, **dadurch gekennzeichnet,**
**dass** die Gepäckkastenanordnung ferner einen wiederaufladbaren Energiespeicher (28) zum Speichern von Energie für den Betrieb des elektrischen Krafterzeugungselements (21) und eine Ladeeinrichtung (27) umfasst;
wobei die Ladeeinrichtung (27) eingerichtet ist, den wiederaufladbaren Energiespeicher (28) mit Energie aus einem Bordnetz zu laden.

2. Gepäckkastenanordnung nach Anspruch 1, **dadurch gekennzeichnet, dass** der Energiespeicher (28) elektrische Speichermittel umfasst.

3. Gepäckkastenanordnung nach Anspruch 2, **dadurch gekennzeichnet, dass** die elektrischen Speichermittel mindestens einen Kondensator umfassen.

4. Gepäckkastenanordnung nach Anspruch 2 oder 3, **dadurch gekennzeichnet, dass** die elektrischen Speichermittel eine Mehrzahl in Reihe geschalteter Kondensatoren umfassen.

5. Gepäckkastenanordnung nach einem der Ansprüche 1 bis 4, **dadurch gekennzeichnet, dass** der Energiespeicher (28) ausreichend für mindestens einen, vorzugsweise mindestens zwei, weiter vorzugsweise mindestens vier Betätigungszyklen des mindestens einen Gepäckkastens (10) dimensioniert ist.

6. Gepäckkastenanordnung nach einem der Ansprüche 1 bis 5, **dadurch gekennzeichnet, dass** das Krafterzeugungselement (21) dazu eingerichtet ist, den mindestens einen Gepäckkasten (10) ohne Fremdkraft in die geschlossene Position zu bewegen.

7. Gepäckkastenanordnung nach einem der Ansprüche 1 bis 6, **dadurch gekennzeichnet, dass** die Ladeleistung der Ladeeinrichtung (27) wesentlich geringer ist als die Leistungsaufnahme des Krafterzeugungselements (21).

8. Gepäckkastenanordnung nach einem der Ansprüche 1 bis 7, **dadurch gekennzeichnet, dass** das Krafterzeugungselement (21) ein Elektromotor ist.

9. Gepäckkastenanordnung nach Anspruch 8, **dadurch gekennzeichnet, dass** der Elektromotor zum Betrieb in beiden Drehrichtungen vorgesehen ist.

10. Gepäckkastenanordnung nach Anspruch 8 oder 9, **dadurch gekennzeichnet, dass** der Elektromotor (21) beim Absenken des mindestens einen Gepäckkastens (10) als Motorbremse wirkt.

11. Gepäckkastenanordnung nach einem der Ansprüche 1 bis 10, **dadurch gekennzeichnet, dass** der mindestens eine Gepäckkasten (10) einen Schalter oder Taster (26) zum Öffnen bzw. Schliessen des mindestens einen Gepäckkastens (10) aufweist.

12. Gepäckkastenanordnung nach einem der Ansprüche 1 bis 11, **dadurch gekennzeichnet, dass** die Hubvorrichtung eine Verbindung (35) zu einer zentralen Steuereinheit des Flugzeugs aufweist.

13. Gepäckkastenanordnung nach einem der Ansprüche 1 bis 12, **dadurch gekennzeichnet, dass** der mindestens eine Gepäckkasten (10) ein elektrisch ansteuerbares Schloss aufweist.

14. Gepäckkastenanordnung nach Anspruch 13, **dadurch gekennzeichnet, dass** das Schloss von einer zentralen Steuereinheit des Flugzeugs ansteuerbar ist.

15. Flugzeug mit einer Gepäckkastenanordnung gemäß einem der Ansprüche 1 bis 14,
**dadurch gekennzeichnet,**
**dass** die Gepäckkastenanordnung eine Mehrzahl von Gepäckkästen aufweist; und
**dass** der wiederaufladbare Energiespeicher (28) Energie für den Betrieb der Mehrzahl von Gepäckkästen (10) bereitstellt.

## Claims

1. Luggage case arrangement having at least a luggage case in an aircraft, wherein the at least one luggage case (10) comprises a lifting device;
wherein the at least one luggage case (10) is moveable between an opened and a closed position; and
wherein the lifting device includes a force generation element (21), which exerts a lifting force on the at least one luggage case (10), and wherein the force generation element (21) is an electrical force generating element; **characterised in that**
the luggage case arrangement further includes a rechargeable energy store (28) for storing energy for purposes of operating the electrical force generating element (21), and a charging device (27);
wherein the charging device (27) is arranged for charging the rechargeable energy store (28) with energy from a board net.

2. Luggage case arrangement of Claim 1, **characterised in that** the energy store (28) includes an electrical storing means.

3. Luggage case arrangement of Claim 2, **characterised in that** the electrical storing means includes at least one capacitor.

4. Luggage case arrangement of Claim 2 or 3, **characterised in that** the electrical storing means includes a plurality of capacitors connected in series.

5. Luggage case arrangement of any of Claims 1 to 4, **characterised in that** the energy store (28) is sufficiently dimensioned for at least one, preferably at least two, further preferably at least four operating cycles of the at least one luggage case (10).

6. Luggage case arrangement of any of Claims 1 to 5, **characterised in that** the force generating element (21) is arranged to move the at least one luggage case (10) without an external force into the closed position.

7. Luggage case arrangement of any of Claims 1 to 6, **characterised in that** the charging power of the charging device (27) is much lower than the power consumption of the force generating element (21).

8. Luggage case arrangement of any of the Claims 1 to 7, **characterised in that** the force generating element (21) is an electro motor.

9. Luggage case arrangement of Claim 8, **characterised in that** the electro motor is prepared for operating in both rotation directions.

10. Luggage case arrangement of Claim 8 or 9, **characterised in that** the electro motor (21) serves as a motor brake when sinking the at least one luggage case (10).

11. Luggage case arrangement of any of Claims 1 to 10, **characterised in that** at least one luggage case (10) comprises a switch or sensing device (26) for opening and closing, respectively, the at least one luggage case (10).

12. Luggage case arrangement of any of Claims 1 to 11, **characterised in that** the lifting device comprises a connection (35) to a central controlling unit of the aircraft.

13. Luggage case arrangement of one of Claims 1 to 12, **characterised in that** the at least one luggage case (10) comprises an electrically controllable lock.

14. Luggage case arrangement of Claim 13, **characterised in that** the lock is controllable by a central controlling unit of the aircraft.

15. Aircraft having a luggage case arrangement according to any of the Claims 1 to 14, **characterised in that**
the luggage case arrangement comprises a plurality of luggage cases; and
the rechargeable energy store (28) provides energy for the operation of the plurality of luggage cases (10).

## Revendications

1. Agencement de coffre à bagages dans un avion, comprenant au moins un coffre à bagages dans lequel :
- le au moins coffre à bagages (10) comporte un dispositif de levage,
- le au moins coffre à bagages (10) est déplaçable entre une position d'ouverture et une position de fermeture,
- le dispositif de levage comprend un élément de génération de force (21), qui exerce une force de levage sur le au moins coffre à bagages (10), et
- l'élément de génération de force (21) est un élément de production de force électrique,
**caractérisé en ce que** l'agencement de coffre à bagages comprend en outre un accumulateur d'énergie rechargeable (28), destiné à accumuler de l'énergie pour le fonctionnement de l'élément de génération de force électrique (21), et un dispositif de chargement (27), le dispositif de chargement (27) étant conçu pour charger l'accumulateur d'énergie rechargeable (28) par l'énergie d'un réseau de bord.

2. Agencement de coffre à bagages suivant la revendication 1, **caractérisé en ce que** l'accumulateur d'énergie (28) comprend des moyens d'accumulation électriques.

3. Agencement de coffre à bagages suivant la revendication 2, **caractérisé en ce que** les moyens d'accumulation électriques comportent au moins un condensateur.

4. Agencement de coffre à bagages suivant l'une des revendications 2 et 3, **caractérisé en ce que** les moyens d'accumulation électriques comportent une pluralité de condensateurs montés en série.

5. Agencement de coffre à bagages suivant l'une des revendications 1 à 4, **caractérisé en ce que** l'accumulateur d'énergie (28) est suffisamment dimensionné pour au moins un, de préférence au moins 2, plus préférentiellement au moins quatre, cycles d'actionnement de le au moins coffre à bagages (10).

6. Agencement de coffre à bagages suivant l'une des revendications 1 à 5, **caractérisé en ce que** l'élément de génération de force (21) est conçu pour déplacer le au moins coffre à bagages (10) sans force extérieure dans la position de fermeture.

7. Agencement de coffre à bagages suivant l'une des revendications 1 à 6, **caractérisé en ce que** la puissance de chargement du dispositif de chargement (27) est essentiellement plus faible que la puissance absorbée par l'élément de génération de force (21).

8. Agencement de coffre à bagages suivant l'une des revendications 1 à 7, **caractérisé en ce que** l'élément de génération de force (21) est un moteur électrique.

9. Agencement de coffre à bagages suivant la revendication 8, **caractérisé en ce que** le moteur électrique est prévu pour le fonctionnement dans les deux sens de rotation.

10. Agencement de coffre à bagages suivant l'une des revendications 8 et 9, **caractérisé en ce que** le moteur électrique (21) fait office de frein moteur lors de l'abaissement de le au moins coffre à bagages (10).

11. Agencement de coffre à bagages suivant l'une des revendications 1 à 10, **caractérisé en ce que** le au moins coffre à bagages (10) comporte un interrupteur ou bouton-poussoir (26) pour l'ouverture et/ou la fermeture de le au moins coffre à bagages (10).

12. Agencement de coffre à bagages suivant l'une des revendications 1 à 11, **caractérisé en ce que** le dispositif de levage comporte une liaison (35) avec une unité de commande centrale de l'avion.

13. Agencement de coffre à bagages suivant l'une des revendications 1 à 12, **caractérisé en ce que** le au moins coffre à bagages (10) comporte une serrure à commande électrique.

14. Agencement de coffre à bagages suivant la revendication 13, **caractérisé en ce que** la serrure peut être commandée par une unité de commande centrale de l'avion.

15. Avion avec un agencement de coffre à bagages suivant l'une des revendications 1 à 14, **caractérisé en ce que** l'agencement de coffre à bagages comporte une pluralité de coffres à bagages et que l'accumulateur d'énergie rechargeable (28) fournit de l'énergie pour le fonctionnement de la pluralité de coffres à bagages (10).
